# EUROPÄISCHE PATENTSCHRIFT

(11) **EP 1 325 239 B1**
(45) Veröffentlichungstag und Bekanntmachung des Hinweises auf die Patenterteilung: **14.04.2004**
(21) Anmeldenummer: 01978181.4
(22) Anmeldetag: 21.09.2001
(51) Int. Cl.: F16C 39/06, F16C 32/04

(54) **EINRICHTUNG MIT ROTOR UND MAGNETLAGER ZUR BERÜHRUNGSLOSEN LAGERUNG DES ROTORS**
DEVICE COMPRISING A ROTOR AND A MAGNETIC SUSPENSION BEARING FOR THE CONTACTLESS BEARING OF THE ROTOR
DISPOSITIF COMPORTANT UN ROTOR ET DES PALIERS MAGNETIQUES POUR LE LOGEMENT SANS CONTACT DU ROTOR

(30) Priorität: 09.10.2000 DE 10049821
(43) Veröffentlichungstag der Anmeldung: 09.07.2003
(73) Patentinhaber: SIEMENS AKTIENGESELLSCHAFT, 80333 München (DE)
(72) Erfinder: STEINMEYER, Florian, Leafield, Oxfordshire OX8 5NP (GB)
(86) Internationale Anmeldenummer: PCT/DE2001/003655
(87) Internationale Veröffentlichungsnummer: WO 2002/031371

(56) Entgegenhaltungen:
- DE-A- 4 232 869
- DE-A- 4 234 524
- DE-A- 19 710 501
- DE-C- 4 436 831
- JP-A- 4 370 417
- US-A- 5 214 981
- US-A- 5 482 919
- US-A- 5 760 506
- US-A- 6 043 577
- PATENT ABSTRACTS OF JAPAN vol. 018, no. 493 (E-1606), 14. September 1994 (1994-09-14) & JP 06 165478 A (HONDA MOTOR CO LTD), 10. Juni 1994 (1994-06-10)
- PATENT ABSTRACTS OF JAPAN vol. 1997, no. 12, 25. Dezember 1997 (1997-12-25) & JP 09 205741 A (ISHIKAWAJIMA HARIMA HEAVY IND CO LTD), 5. August 1997 (1997-08-05)

## Beschreibung

Die Erfindung betrifft eine Einrichtung mit wenigstens einem um eine Rotationsachse rotierbaren oder rotierenden Rotor und wenigstens einem Magnetlager, in dem der Rotor berührungslos lagerbar oder gelagert ist.

Die *US 5 482 919 A* offenbart eine Einrichtung, die einen um eine Rotationsachse rotierbaren Rotor mit wenigstens einer supraleitenden Wicklung (Feldspule) für einen elektrischen Motor und einen Kryokühler zum Kühlen der supraleitenden Wicklung umfaßt. Die supraleitende Wicklung kann aus einem konventionellen, metallischen Supraleitermaterial (Niedrigtemperatur-Supraleiter) mit einer niedrigen Sprungtemperatur (kritische Temperatur) T_{c} unterhalb 35 K wie einer Niob-Zinn-Legierung oder einem keramischen metalloxidischen Supraleitermaterial (Hochtemperatur-Supraleiter) mit einer hohen Sprungtemperatur T_{c} oberhalb von 35 K wie einem Wismut-Strontium-Calcium-Kupfer-Oxid, einem Yttrium-Barium-Kupfer-Oxid oder einer Quecksilber- oder Thallium-Verbindung bestehen. Der Kryokühler kühlt durch schnelle Ausdehnung eines mittels eines Kompressors komprimierten Arbeitsfluids wie Helium, Neon, Stickstoff, Wasserstoff oder Sauerstoff in thermodynamischen Zyklen (Prozessen) wie einem Gifford-McMahon-Zyklus, einem Stirling-Zyklus oder einem Pulsröhren-Zyklus. Die supraleitende Wicklung steht mit einem mit dem Rotor mitrotierenden Kaltkopf des Kryokühlers über mehrere ringförmige Stützelemente aus einem Material mit einem hohen Wärmeleitkoeffizienten, die über Wärmerohre (Heat pipes) oder wärmeleitende Stangen verbunden sind, in wärmeleitender Verbindung. Dadurch wird Wärme von der supraleitenden Wicklung über Wärmeleitung durch Festkörper zum Kaltkopf abgeführt. Ein flüssiges Kühlmittel wie flüssiges Helium oder flüssiger Stickstoff ist bei diesem bekannten Kühlsystem nicht erforderlich, so daß auch keine Beeinflussung der Rotation des Rotors durch Kälteflüssigkeit auftritt. Der Kompressor des Kryokühlers kann mitrotieren oder ortsfest zum Rotor und über eine Rotationskupplung mit dem Kaltkopf verbunden sein. Über die Lagerung des Rotors ist in der *US 5 482 919 A* nichts weiter ausgeführt.

Allgemein sind zur Lagerung von Rotoren Magnetlager bekannt, die eine berührungslose (kontaktlose) und damit verschleißfreie Lagerung ermöglichen. Es sind sowohl aktive Magnetlager mit Elektromagneten und Lageregelung als auch passive Magnetlager mit selbsttätiger Lagestabilisierung bekannt.

Aus der *DE 44 36 831 C2* ist ein passives Magnetlager zum Lagern einer Rotorwelle gegen einen Stator bekannt, das ein erstes Lagerteil, das mit der Rotorwelle verbunden ist, und ein zweites Lagerteil, das am Stator angeordnet ist und das erste Lagerteil umgibt, umfaßt. Eines der beiden Lagerteile weist einen Hochtemperatur-Supraleiter auf. Das andere Lagerteil umfaßt eine Anordnung von nebeneinander angeordneten permanentmagnetischen Elementen aus einer Neodym(Nd)-Eisen(Fe)-Bor(B)-Legierung oder einer Samarium(Sm)-Cobalt(Co)-Legierung. Die Magnetisierung benachbarter permanentmagnetischer Elemente ist entgegengesetzt zueinander. Die permanentmagnetischen Elemente induzieren bei einer Lageänderung als Folge von Feldänderungen in dem Supraleiter Abschirmströme. Die resultierenden Kräfte können abstoßend oder anziehend sein, sind aber immer so gerichtet, daß sie der Auslenkung aus der Soll-Lage entgegenwirken. Im Gegensatz zu konventionellen aktiven Magnetlagern kann dabei eine inhärent stabile Lagerung erreicht werden, und eine aufwendige und störanfällige Regelung kann entfallen. Die Zwischenräume zwischen jeweils zwei permanentmagnetischen Elementen sind mit ferromagnetischem Material ausgefüllt zur Konzentration des aus den permanentmagnetischen Elementen austretenden Magnetflusses an der dem anderen Lagerteil zugewandten Seite. Man erhält dadurch eine hohe Lagersteifigkeit (Stabilität). Die permanentmagnetischen Elemente mit den ferromagnetischen Zwischenelementen können axial zur Rotorwellenachse hintereinander in Form von dünnen Ringen angeordnet sein oder auch axial langgestreckt sein und in Umfangsrichtung hintereinander angeordnet sein.

In einer Ausgestaltung dieses bekannten Magnetlagers sind die Permanentmagnete in hohlzylindrischer Anordnung am inneren Lagerteil vorgesehen und der Supraleiter ist als hohlzylindrische Struktur an der Innenseite eines hohlzylindrischen Trägerkörpers des äußeren Lagerteils angeordnet. Im Trägerkörper sind Kühlkanäle zum Durchleiten von flüssigem Stickstoff zur Kühlung des Supraleiters ausgebildet.

In einer anderen Ausgestaltung gemäß der *DE 44 36 831 C2* ist der Hochtemperatur-Supraleiter am inneren Lagerteil an der Rotorwelle angeordnet, wobei zur Kühlung des Hochtemperatur-Supraleiters ein Kühlmittelkanal in der Rotorwelle für den flüssigen Stickstoff vorgesehen wird. Diese Ausführungsform mit einem kalten Rotorkörper wird als Teil eines Generators oder Motors mit einer tiefgekühlten normalleitenden oder supraleitenden Wicklung vorgeschlagen.

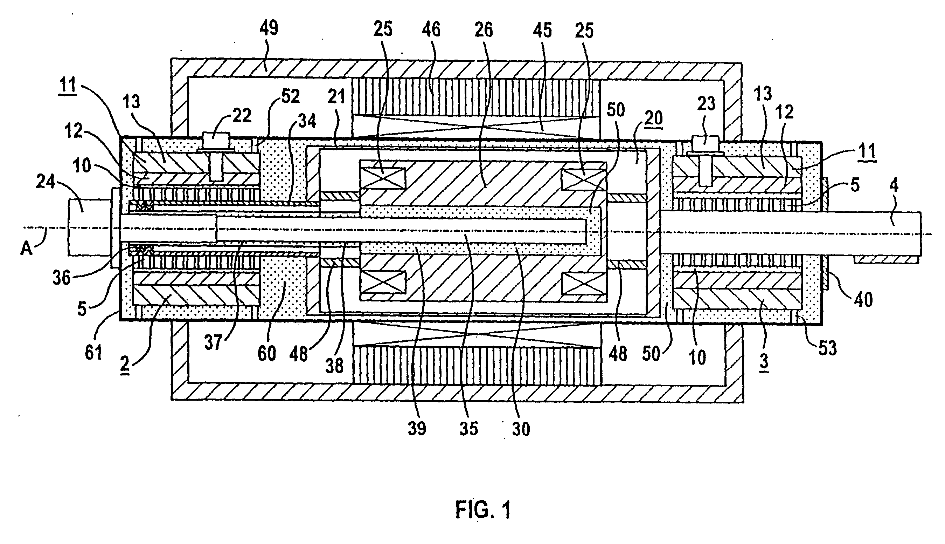

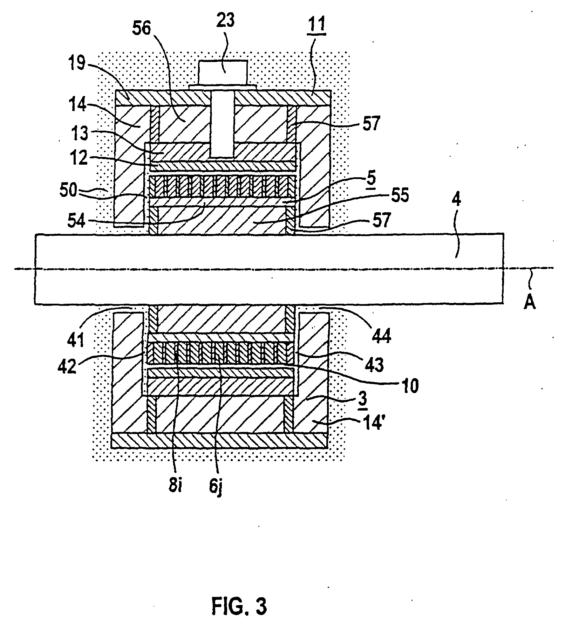

Aus der Druckschrift *US 5,214,981 A* ist eine Einrichtung zum Speichern von Energie bekannt. Diese Einrichtung umfaßt ein rotierendes Schwungrad, das zur Energieübertragung an seinem Umfang Permanentmagnete aufweist, die mit feststehenden Elektromagneten wechselwirken. Das Schwungrad ist über zwei Rotorwellen an entgegengesetzten Seiten in jeweils einem Magnetlager gelagert. In einer Ausführungsform (FIG 1) sind an den Enden der beiden Rotorwellen jeweils einer oder mehrere Permanentmagnete in zylindrischer Anordnung vorgesehen. Diese Enden ragen als erste Lagerteile in jeweils einen topfförmigen Supraleiter als zweites Lagerteil des jeweiligen Magnetlagers. Die Supraleiter sind zur Kühlung jeweils in einem Kältebad aus flüssigem Stickstoff angeordnet. In einer anderen Ausführungsform (FIG 3) weist jede Rotorwelle als erstes Magnetlagerteil an ihrer vom Schwungrad abgewandten Stirnseite eine Ausnehmung auf, die mit einem Supraleiter ausgekleidet ist. Der Supraleiter wird ausschließlich durch die Wärmestrahlung vom Supraleiter zum in einem Flüssigkeitsbad mit flüssigem Stickstoff gehaltenen Vakuumgefäß gekühlt. Ferner umfassen die Magnetlager zylindrische zweite Lagerteile, deren Enden in die Ausnehmungen in den Rotorwellen hineinragen und einen oder mehrere Permanentmagneten in zylindrischer Anordnung umfassen. Das Schwungrad ist zusammen mit den beiden Magnetlagern in einem Vakuumgefäß eingeschlossen, das auf einen Druck von weniger als 10⁻⁴ Torr evakuiert ist, um die Reibung der drehenden Teile und die damit verbundenen Energieverluste zu vermeiden. Die Lagerspalte der beiden Magnetlager bilden durchgehende Verbindungen zwischen den angrenzenden evakuierten Bereichen des Vakuumgefäßes.

Die *JP 04370417 A* und das zugehörige Abstract aus Patent Abstracts of Japan offenbaren eine weitere Einrichtung zum Speichern von Energie mit einem in zwei Magnetlagern gelagerten Schwungrad, das zusammen mit den Magnetlagern in einer gemeinsamen evakuierten Vakuumkammer angeordnet ist. Jedes Magnetlager umfaßt einen zentralen Permanentmagnetring am Schwungrad und zwei davon axial beabstandete Supraleiterringe, die auf von flüssigem Kältemittel durchflossenen, feststehenden Trägerscheiben angeordnet sind.

In der *DE 197 10 501 A1* schließlich ist eine elektrische Maschine beschrieben mit einem Stator mit einer mehrphasigen Wicklung zur Erzeugung eines magnetischen Drehfeldes und einem sich mit dem Drehfeld drehenden Rotor oder Läufer. Der Stator weist ein Rückflussjoch auf, das ein Gehäuse für den Rotor bildet. Der Rotor weist eine Welle auf, die durch eine nicht abgedichtete Öffnung im Gehäuse und Rückflussjoch geführt ist. Der Rotor besteht nun ganz oder zumindest an seiner Außenseite aus einem Hochtemperatur-Supraleiter. Mit dem Supraleiter und an zwei Stellen vorgesehenen ringförmigen Permanentmagneten sind Magnetlager zur berührungslosen Lagerung des Läufers gebildet. Zur Kühlung des Supraleiters des Rotors wird die gesamte Maschine mit einer kleinen Baugröße ausgebildet und komplett in einem aus Flüssigstickstoff ausgebildeten Tiefkühlbad betrieben.

Die bekannten Magnetlager weisen wegen der berührungslosen Lagerung immer einen durchgehenden Lagerspalt auf und sind somit zwischen den beiden Seiten, die durch den Lagerspalt verbunden werden, gas- und dampfdurchlässig. Dadurch kann Umgebungsluft und darin enthaltene Feuchtigkeit in den Lagerspalt oder durch den Lagerspalt zum Rotor gelangen. Dies birgt die Gefahr, daß die Luftfeuchtigkeit an den kalten Bauteilen des Magnetlagers oder auch des Rotors, wenn dieser gekühlt wird, ausfriert und es durch eine solche Vereisung zu einer Funktionseinschränkung oder gar Beschädigung des Magnetlagers kommt. Außerdem verursachen die für die Supraleiter der beschriebenen Magnetlager nach dem Stand der Technik ausschließlich verwendeten Kühlungen mit flüssigem Kühlmittel (Kryomittel), im allgemeinen flüssigem Stickstoff, neben dem Problem des Ausgefrierens von eingedrungener Feuchtigkeit an den erforderlichen Kryomittelzuführungen generell auch Abdichtungsprobleme im Bereich der sensiblen Magnetlager, wodurch wiederum die Gefahr des Vereisens oder sonstiger Funktionsstörungen des Magnetlagers erhöht wird.

Der Erfindung liegt die Aufgabe zugrunde, das oder die Magnetlager zur Lagerung eines Rotors vor einer solchen Beeinträchtigung der Funktion oder einer Beschädigung zu schützen.

Diese Aufgabe wird gemäß der Erfindung gelöst mit den Merkmalen des Anspruchs 1.

Die Einrichtung umfaßt demnach einen um eine Rotationsachse rotierbaren oder rotierenden Rotor und wenigstens ein Magnetlager, in dem der Rotor berührungslos (oder: kontaktlos, verschleißfrei) lagerbar oder gelagert ist und das wenigstens einen Supraleiter (oder: eine supraleitende Struktur) aufweist.

Der Rotor ist gemäß der Erfindung zusammen mit dem oder den zugehörigen Magnetlagern in einem gemeinsamen Gasraum (oder gasgefüllte Kammer) angeordnet, der von einer gasdichten Wandung umschlossen ist. Rotor und Magnetlager befinden sich also, mit anderen Worten, in der gleichen Gasatmosphäre, die durch die gasundurchlässige Wandung von der Umgebungsluft getrennt und abgeschirmt ist. Durch diese Maßnahmen ist der Lagerspalt jedes Magnetlagers mit dem im Gasraum eingefüllten Gas gefüllt und durch die Gasraumwandung vor dem Eindringen von Umgebungsfeuchtigkeit geschützt. Außerdem sind Druckschwankungen, beispielsweise infolge von Gasverlusten in gewissen Grenzen tolerierbar, weil sie alle Komponenten im Gasraum gleich betreffen.

Als weitere Maßnahme gemäß der Erfindung ist nun zur Kühlung des Supraleiters des oder jedes Magnetlagers eine Kühleinrichtung mit wenigstens einem Kaltkopf, der thermisch mit dem Supraleiter gekoppelt ist und Wärme vom Supraleiter hauptsächlich durch Wärmeleitung als Wärmetransportmechanismus abführt, vorgesehen. Der gemäß der Erfindung vorgeschlagene Einsatz eines, an sich prinzipiell bekannten, Kaltkopfes zur indirekten Kühlung des Magnetlagers ist eine konstruktiv und in der Handhabung wesentlich einfachere Lösung als die beim Stand der Technik vorgesehene direkte Kühlung über ein flüssiges Kühlmedium. Ein Kaltkopf ist als Anschlussstück zur Wärmeübertragung leicht am Magnetlager montierbar. Außerdem stellt die Verwendung eines oder mehrerer Kaltköpfe eine gezielte Kühlung des Supraleiters im Magnetlager sicher und vermeidet die Probleme des nie ganz zu vermeidenden Austretens von Kryoflüssigkeit und der dadurch resultierenden unkontrollierten thermischen Verhältnisse mit der Gefahr des Vereisens der Magnetlager durch Gefrieren von Restfeuchtigkeit in der Gasatmosphäre oder von im verdampften Kryomittel enthaltener Feuchtigkeit.

Vorteilhafte Ausgestaltungen und Weiterbildungen der Einrichtung gemäß der Erfindung ergeben sich aus den vom Anspruch 1 abhängigen Ansprüchen.

Vorzugsweise weist die Kühleinrichtung zur Kühlung des Kaltkopfes und damit zur indirekten Kühlung des oder der Magnetlager(s) ein Kryokühler-System auf, das insbesondere elektrisch betrieben wird und in Verbindung mit dem Kaltkopf keine Handhabung von kryotechnischen Flüssiggasen erfordert. Verschiedene Kaltköpfe können jeweils mit einem eigenen Kryokühler oder auch in beliebigen Kombinationen an gemeinsame Kryokühler angeschlossen sein. Jeder Kaltkopf ist vorzugsweise von außen in einer im wesentlichen senkrecht zur Rotationsachse verlaufenden Richtung zur supraleitenden Struktur des Magnetlagers geführt.

Das oder die Magnetlager der Einrichtung umfassen im allgemeinen wenigstens ein inneres Lagerteil und wenigstens ein äußeres Lagerteil, wobei das äußere Lagerteil das innere Lagerteil umgibt und zwischen den beiden Lagerteilen ein um die Rotationsachse verlaufender Lagerspalt gebildet ist sowie eines der beiden Lagerteile mit dem Rotor, insbesondere mit dessen Rotorwelle, verbindbar oder verbunden ist.

Eines der beiden Lagerteile des Magnetlagers weist nun vorzugsweise wenigstens einen Permanentmagneten auf, während das andere Lagerteil die supraleitende Struktur umfaßt, die mit dem oder den Permanentmagneten derart elektromagnetisch (durch Induktion) wechselwirken, daß der Lagerspalt zwischen dem inneren Lagerteil und dem äußeren Lagerteil gebildet oder aufrechterhalten wird. Bei mehreren Permanentmagneten sind diese im allgemeinen nebeneinander angeordnet, insbesondere axial zur Rotationsachse hintereinander und vorzugsweise jeweils die Rotationsachse in einer ringsum geschlossenen Gestalt umgeben, insbesondere in Gestalt eines Ringes, oder auch in einer die Rotationsachse umlaufenden Anordnung nebeneinander. Der oder die Permanentmagneten umgeben in einer vorteilhaften Ausgestaltung die Rotationsachse in einer (ringsum) geschlossenen Gestalt, vorzugsweise in Gestalt eines Ringes. Der Ringquerschnitt kann dabei insbesondere kreisförmig, scheibenförmig oder rechteckig sein entsprechend einer hohlzylindrischen bzw. torusförmigen Ringgestalt. Der Ringlängsschnitt senkrecht zur Rotationsachse kann also insbesondere kreisringförmig sein. Die Magnetisierungen unmittelbar benachbarte Permanentmagnete sind vorzugsweise zueinander im wesentlichen entgegengesetzt gerichtet, zumindest im Mittel über eventuell vorhandene Domänen.

Eine vorteilhafte Weiterbildung des Magnetlagers ist dadurch gekennzeichnet, daß zwischen wenigstens zwei der Permanentmagneten jeweils ein Flussleitelement und/oder in axialer Richtung an den äußeren Permanentmagneten außen jeweils ein Flussleitelement angeordnet ist. Jedes Flussleitelement dient zum Leiten des magnetischen Flusses der Permanentmagnete sowie im allgemeinen auch zu dessen Konzentration und Verstärkung im Lagerspalt und besteht dazu zumindest teilweise aus einem magnetisch leitfähigen Material, insbesondere einem ferromagnetischen Material, beispielsweise Eisen (Fe).

Die supraleitende Struktur umgibt vorzugsweise die Rotationsachse in einer geschlossenen Gestalt, insbesondere in Gestalt eines Ringes, und/oder sind zumindest an der dem Lagerspalt zugewandten Seite im wesentlichen zylindrisch geformt. Ferner ist es vorteilhaft, die supraleitende Struktur an der dem Lagerspalt zugewandten Seite des Lagerteils anzuordnen, um einen guten Wirkungsgrad der Kopplung zu erreichen.

Es ist im allgemeinen jeweils wenigstens ein Kaltkopf für jedes Magnetlager zur Kühlung der supraleitenden Strukturen und zweckmäßigerweise auch der Permanentmagnete zur Erzielung einer höheren Koerzitivfeldstärke vorgesehen.

Der Lagerspalt wenigstens eines der berührungslosen Magnetlager steht nun vorzugsweise mit dem Gasraum in einer Verbindung, die einen Gasaustausch zulässt. Dadurch befindet sich der Lagerspalt in der gleichen Gasatmosphäre, die auch im Gasraum herrscht.

Im allgemeinen ist die Wandung des Gasraumes gegenüber dem Rotor ortsfest, bleibt also bei Drehung des Rotors unveränderlich in ihrer Position relativ zur Rotationsachse des Rotors.

Der Rotor ist vorzugsweise über eine mit dem Rotor verbundene oder verbindbare Rotorwelle in dem Magnetlager gelagert. Die Rotorwelle ist vorzugsweise durch eine mit einer Rotationsdichtung abgedichtete Öffnung in der Wandung des Gasraumes nach außen geführt.

In einer besonders vorteilhaften Ausführungsform der Einrichtung ist der Rotor, vorzugsweise über jeweils eine Rotorwelle, in wenigstens zwei Magnetlagern gelagert ist, die an axial zur Rotationsachse entgegengesetzten Seiten des Rotors angeordnet sind. Dadurch ist der Rotor beidseitig und damit besonders stabil gelagert.

Eine vorteilhafte Weiterbildung des Rotors ist durch wenigstens eine Wicklung (Spule) gekennzeichnet, die im allgemeinen um die Rotationsachse verläuft und vorzugsweise mit einem Supraleiter gebildet ist.

Als Supraleiter für die Magnetlager und/oder die Wicklung am Rotor kommen alle Niedrigtemperatur-Supraleiter wie Hochtemperatur-Supraleiter in Betracht. Der Supraleiter kann ein klassischer Niedrigtemperatur-Supraleiter mit einer Sprungtemperatur bis 35 K sein, beispielsweise eine metallische Legierung wie Niob-Zinn-Legierung, oder vorzugsweise ein Hochtemperatur-Supraleiter mit einer Sprungtemperatur oberhalb 35 K, vorzugsweise oberhalb 77 K (i.e. der Siedetemperatur von Stickstoff), beispielsweise metalloxidische oder keramische Hochtemperatur-Supraleiter wie Wismut-Strontium-Calcium-Kupfer-Oxid, Yttrium-Barium-Kupfer-Oxid oder eine Verbindung mit Quecksilber oder Thallium. Je höher die Sprungtemperatur des Supraleiters ist, desto geringer ist der Energiebedarf für die Kühlung.

Nachdem vor allem Hochtemperatur-Supraleiter nur in beschränktem Maße selbsttragend sind, bietet es sich in einer vorteilhaften Weiterbildung an, die supraleitende Struktur des Magnetlagers oder die supraleitende Wicklung des Rotors auf oder in einem Träger bzw. Wicklungsträger anzuordnen. Zur Kühlung des Supraleiters weist der Träger bzw. Wicklungsträger vorzugsweise eine hohe Wärmeleitfähigkeit auf, beispielsweise durch Ausbildung aus Metall.

In einer besonders vorteilhaften Ausführungsform weist der Wicklungsträger des Rotors einen axial zur Rotationsachse sich erstreckenden Hohlraum (Innenraum) auf. Die Kühlung der Wicklung kann nun vorteilhaft in platzsparender Weise über diesen Hohlraum erfolgen, indem im Hohlraum oder am Hohlraum eine Wärmeübertragungseinheit thermisch an den Wicklungsträger, vorzugsweise über ein Kontaktgas im Hohlraum, angekoppelt wird.

Die Wärmeübertragungseinheit ist nun vorzugsweise mit einer Kühleinrichtung für den Rotor thermisch koppelbar oder gekoppelt. Diese Kühleinrichtung kann in an sich bekannter Weise ausgebildet sein, beispielsweise gemäß der eingangs genannten *US 5 482 919 A*. Die Kühleinrichtung und/oder Wärmeübertragungseinheit für den Rotor kann auch mit einem flüssigen Kühlmittel wie flüssigem Helium oder flüssigem Stickstoff arbeiten oder auch ein Kryokühler-System mit wenigstens einem Kaltkopf aufweisen ebenso wie das Kühlsystem für das Magnetlager.

Gemäß einer besonderen Ausbildung weist die Wärmeübertragungseinheit einen in den Hohlraum des Wicklungsträgers ragenden, vorzugsweise zylindrisch ausgebildeten, Wärmeübertragungskörper auf, zwischen dem und dem Wicklungsträger ein um die Rotationsachse verlaufender, mit einem Kontaktgas gefüllter Zwischenspalt gebildet ist. Die Wärmeübertragung von der oder Kühlung der Wicklung geschieht nun im wesentlichen durch Wärmeleitung durch die Festkörper und über das Kontaktgas.

Es kann aber auch alternativ oder zusätzlich als Wärmetransportmechanismus die zyklische Verdampfung und Kondensation eines Wärmetransportgases mit einer entsprechend gewählten Verdampfungsenthalpie ausgenutzt werden. Die Wärmeübertragungseinheit kann dann insbesondere ein Wärmerohr (heat pipe) umfassen.

In einer beide Wärmetransportmechanismen Wärmeleitung und Verdampfung nutzenden Ausführungsform ist der Hohlraum des Wicklungsträgers wenigstens teilweise mit dem Wärmetransportgas gefüllt, so daß das Wärmetransportgas auch als wärmeleitendes Kontaktgas dient.

Der Hohlraum des Wicklungsträgers bzw. der Zwischenspalt zwischen Wärmeübertragungskörper und Wicklungsträger kann auch mit dem Gasraum in einen Gasaustausch zulassender Verbindung stehen. Es stellt sich dann eine einheitliche Gasatmosphäre innerhalb und außerhalb des Rotors ein und besondere Maßnahmen zur Abdichtung dieser Gasräume müssen nicht mehr getroffen werden.

Die berührungslose Anordnung der Wärmeübertragungseinheit in dem Wicklungsträger ist besonders dann vorteilhaft, wenn die beiden Komponenten mechanisch voneinander entkoppelt sein sollen, also die Wärmeübertragungseinheit feststehend sein soll bei Rotation des Rotors. Eine solche feststehende, nicht-mitrotierende Ausbildung der Wärmeübertragungseinheit und ggf. des angeschlossenen Kaltkopfes ist zweckmäßig, weil keine rotierenden Teile des Kühlsystems gegeneinander abgedichtet werden müssen.

In einer besonderen konstruktiven Weiterbildung ist wenigstens eine in dem zugehörigen Magnetlager gelagerte Rotorwelle als Hohlwelle ausgebildet. Die Hohlwelle kann nun wenigstens teilweise die Wärmeübertragungseinheit und/oder einen Verbindung zwischen Gasraum und einem Innenraum des Rotors, insbesondere dem Hohlraum im Wicklungsträger, aufnehmen.

Zum Schutz der Wicklung wird diese vorzugsweise in einem, Innenraum eines Behältnisses des Rotors angeordnet, der vorzugsweise evakuiert und gegenüber dem übrigen Gasraum und Hohlraum des Wicklungsträgers abgedichtet ist.

Der Gasraum der Einrichtung, in dem Rotor und Magnetlager angeordnet sind, ist im allgemeinen mit einem Gas oder einem Gasgemisch gefüllt, das zur Wärmeleitung bei der Kühlung der kühlungsbedürftigen Komponenten dient und dazu mit diesen in Kontakt steht und deshalb auch als Kontaktgas bezeichnet wird. Dieses Gas verbleibt in der Regel während der Betriebsdauer der Einrichtung im Gasraum. Das Kontaktgas ist deshalb in einer vorteilhaften Ausführungsform ein Inertgas oder ein Gemisch aus Inertgasen, wobei Helium oder Neon bevorzugt ist, aber auch, bei entsprechend hohen Arbeitstemperaturen, Stickstoff verwendet werden kann. Ferner sind auch Wasserstoff oder Sauerstoff grundsätzlich geeignet, wenn auch in der Handhabung problematischer.

Das in den Gasraum eingefüllte Gas enthält vorzugsweise praktisch keinen Wasseranteil oder einen unterhalb eines kritischen Wertes liegenden Wasseranteil, so daß kein Gefrieren von Wasser an kalten Teilen im Gasraum möglich ist. Dazu wird das Gas in einer entsprechenden Reinheit bereitgestellt und/oder getrocknet.

Der Gasdruck des Gases im Gasraum wird in einer vorteilhaften Ausführungsform vorzugsweise wenigstens so hoch wie, vorzugsweise höher als, der im die Wandung des Gasraumes umgebenden Außenraum herrschende Gasdruck, im allgemeinen Atmosphärendruck, eingestellt. Dadurch wird auch bei Dichtungsproblemen oder Leckagen im Bereich der Gasraumwandung ein Zutritt von feuchter Luft und die dadurch mögliche Eisbildung im Kaltbereich zuverlässig verhindert.

Die Einrichtung gemäß der Erfindung wird bevorzugt für elektrische Maschinen wie Motoren und Generatoren eingesetzt.

Die Erfindung wird im folgenden anhand von Ausführungsbeispielen weiter erläutert. Dabei wird auf die Zeichnungen Bezug genommen, in deren
- FIG 1: eine Einrichtung mit einem in zwei Magnetlagern gelagerten Rotor in einem Längsschnitt in einer die Rotationsachse des Rotors enthaltenden Ebene,
- FIG 2: eine Ausführungsform eines Magnetlagers der Einrichtung in einer perspektivischen und teilweise geschnittenen Ansicht,
- FIG 3: eine andere Ausführungsform eines Magnetlagers der Einrichtung in einem Längsschnitt,
- FIG 4: eine weitere Ausführungsform eines Magnetlagers der Einrichtung in einem Querschnitt in einer orthogonal zur Rotationsachse gerichteten Ebene
und
- FIG 5: eine Einrichtung mit einem in zwei Magnetlagern gelagerten Rotor und einem Wärmerohr in einem Längsschnitt
jeweils schematisch veranschaulicht sind. Einander entsprechende Teile sind in den FIG 1 bis 5 mit denselben Bezugszeichen versehen.

FIG 1 zeigt eine Einrichtung mit einem Rotor 20, der axial zu seiner Rotationsachse (Drehachse) A an beiden Seiten (Stirnseiten) in jeweils einem Magnetlager 2 und 3 drehbar gelagert ist. An dem Rotor 20 ist dazu an der in FIG 1 links liegenden Seite eine als Hohlwelle (Halsrohr) 34 ausgebildete erste Rotorwelle ausgebildet oder befestigt, die in dem Magnetlager 2 berührungsfrei gelagert ist. Die Hohlwelle 34 weist in der dargestellten Ausführungsform ferner einen Längenkompensator 36, insbesondere einen Dehnungsbalg, zur Längenkompensation auf. An der in FIG 1 rechts liegenden, entgegengesetzten Seite ist eine beispielsweise massive zweite Rotorwelle 4 am Rotor 20 ausgebildet oder befestigt und in dem Magnetlager 3 berührungsfrei gelagert. Beide Wellen, die Hohlwelle 34 und die Rotorwelle 4, sind vorzugsweise rotationssymmetrisch zur Rotationsachse A, insbesondere hohlzylindrisch bzw. zylindrisch oder auch zumindest leicht konisch, ausgebildet.

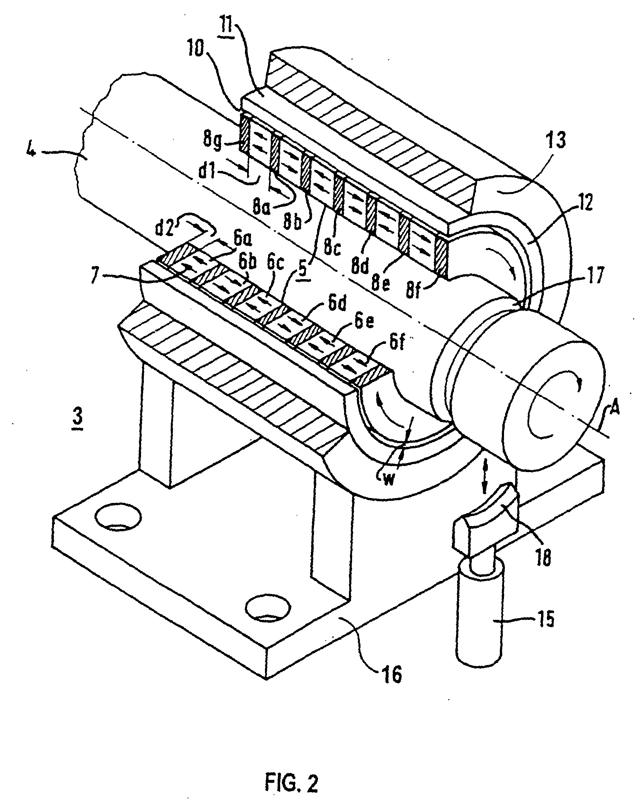

Jedes der vorzugsweise im wesentlichen gleich ausgebildeten Magnetlager 2 und 3 weist ein mit der zugehörigen Hohlwelle 34 bzw. Rotorwelle 4 verbundenes Lagerinnenteil 5 auf und ein das Lagerinnenteil 5 unter Bildung eines Lagerspaltes 10 umgebendes Lageraußenteil 11. Das Lagerinnenteil 5 weist an seiner dem Lagerspalt 10 zugewandten Außenseite mehrere in FIG 1 nicht näher bezeichnete Permanentmagnete auf. Den Permanentmagneten gegenüberliegend weist das Lageraußenteil 11 an seiner dem Lagerspalt 10 zugewandten Innenseite eine supraleitende Struktur 12 auf, die außen auf einem Trägerkörper 13 abgestützt ist. Die supraleitende Struktur 12 ist jeweils mit einem von außen durch den Trägerkörper 13 ragenden Kaltkopf 22 bzw. 23 zur Kühlung kontaktiert. Auf den Aufbau der Magnetlager 2 und 3 wird noch anhand der detaillierteren FIG 2 bis 4 eingegangen. Nun sollen zunächst die weiteren Teile der Einrichtung gemäß FIG 1 noch weiter beschrieben werden.

Der Rotor 20 weist wenigstens eine Wicklung (Spule) 25 auf, die aus einem supraleitenden Material besteht und, vorzugsweise in im wesentlichen gleichem Radius, um die Rotationsachse A in einer oder mehreren Windungen verläuft. Die Wicklung 25 ist auf oder in einem Wicklungsträger 26 getragen, der die Rotationsachse A in Gestalt eines Hohlkörpers, vorzugsweise in hohlzylindrischer Gestalt, umgibt. Der Wicklungsträger 26 besteht aus einem thermisch gut leitfähigen Material wie einem Metall.

Im Innern des Wicklungsträgers 26 ist ein zentraler Hohlraum 30 gebildet, durch den die Rotationsachse A verläuft. Der Hohlraum 30 ist an der zur Rotorwelle 4 hin gerichteten Seite vom Wicklungsträger 26 abgeschlossen und an der zur Hohlwelle 34 zeigenden Seite offen. Durch die Öffnung im Wicklungsträger 26 ragt an dieser Seite ein zylinderförmiger Wärmeübertragungskörper 35 in den Hohlraum 30 und erstreckt sich bis kurz vor dessen Ende an der entgegengesetzten Seite. Der Wärmeübertragungskörper 35 besteht aus einem thermisch gut leitfähigen Material, beispielsweise einem Metall wie Aluminium oder Kupfer oder, zur Vermeidung von Wirbelströmen, auch aus einem dielektrischen, thermisch leitfähigen Material wie einer Keramik, beispielsweise Aluminiumoxid (Al₂O₃) oder Aluminiumnitrid (AlN), oder aus einkristallinem Saphir.

Zwischen dem Wärmeübertragungskörper 35 und der Innenfläche des Wicklungsträgers 26 ist ringsum ein Zwischenraum 39 gebildet. Im Anschluss an den Wicklungsträger 26 ist der Wärmeübertragungskörper 35 nach außen durch einen zentralen Hohlraum im an dieser Seite befindlichen Aufhängeelement 48 bis in den Hohlraum der Hohlwelle 34 geführt jeweils unter Bildung eines Zwischenraumes 38 bzw. 37. Durch die Zwischenräume (Spalte) 37 zur Hohlwelle 34, 38 zum Aufhängeelement 48 und 39 zum Wicklungsträger 26 kann der Wärmeübertragungskörper 35 gegenüber diesen rotierenden Teilen und dem Rotor 20 insgesamt ortsfest, also nicht mitrotierend, angeordnet werden.

Zumindest im Zwischenraum 39 zwischen Wärmeübertragungskörper 35 und Wicklungsträger 26 ist ein Kontaktgas eingebracht, das eine thermische Kopplung zwischen dem Wicklungsträger 26 und dem Wärmeübertragungskörper 35 herstellt. Vorzugsweise sind die Zwischenräume 39, 38 und 37 miteinander verbunden wie dargestellt, so daß das Kontaktgas sich in allen Zwischenräumen 37 bis 39 befindet. Als Kontaktgas ist vorzugsweise Helium oder Neon vorgesehen.

An seinem vom im Hohlraum 30 des Wicklungsträgers 26 befindlichen Ende abgewandten Ende ist der Wärmeübertragungskörper 35 in thermischer Kopplung mit einem Ende eines Kaltkopfes 24 verbunden, der sich axial zur Rotationsachse A von der entgegengesetzten Seite in die Hohlwelle 34 erstreckt. Über den an eine nicht weiter dargestellte Kühleinrichtung, insbesondere einen an sich bekannten Kryokühler, angeschlossenen Kaltkopf 24 wird der Wärmeübertragungskörper 35 gekühlt. Dadurch wird durch Wärmeleitung über das Kontaktgas auch indirekt der Wicklungsträger 26 und wegen dessen gutem Wärmeleitvermögen schließlich die eigentlich zu kühlende supraleitende Wicklung 25 gekühlt. So ist eine Kühlung eines rotierenden Teils, der Wicklung 25, über ein feststehendes Teil, den Wärmeübertragungskörper 35, realisiert.

Der Wicklungsträger 26 mit der Wicklung 25 ist im Innenraum eines Behältnisses 21 angeordnet und an beiden Stirnseiten über jeweils ein Aufhängeelement 48 mit einer Metallhülse und einem Hohlkern aus wärmeisolierendem Material an der Wandung des Behältnisses 21 aufgehängt. An der Außenseite (Mantelfläche) ist der Wicklungsträger 26 von der Wandung des Behältnisses 21 beabstandet. Der im Innenraum des Behältnisses 21 gebildete Zwischenraum zwischen Wicklungsträger 26 und Behältniswand ist vorzugsweise evakuiert auf einen gewünschten Restdruck, um eine möglichst gute thermische Isolierung des Wicklungsträgers 26 nach außen zu erreichen. Dieser evakuierte Bereich im Behältnis 21 ist durch den Wicklungsträger 26 selbst sowie die beiden Aufhängeelemente 48 von den Zwischenräumen 39 und 38 um den Wärmeübertragungskörper 35 gasdicht getrennt.

Es sind nun der Rotor 20 mit den beiden Rotorwellen 34 und 4 und die beiden Magnetlager 2 und 3 gemeinsam in einem von einer gasundurchlässigen Wandung 61 gasdicht umschlossenen Gasraum 60 angeordnet. Dieser Gasraum 60 ist mit einem Gas 50 mit einer vorgegebenen Zusammensetzung gefüllt, insbesondere einem chemisch resistenten (inerten) Gas wie Neon oder Helium oder einem Gemisch daraus.

Die Hohlwelle 34 am Rotor 20 mündet nun vorzugsweise wie dargestellt am vom Rotor 20 anbewandten Ende in den Gasraum 60, so daß eine Gasverbindung zwischen dem außerhalb liegenden Bereich des Gasraumes 60 und den Zwischenräumen 37, 38 und 39 besteht. Ferner sind auch die Lagerspalte 10 der Magnetlager 2 und 3 jeweils an beiden Seiten offen zum Gasraum 60. Die Zwischenräume 37, 38 und 39, die Lagerspalte 10 und der übrige Gasraum 60 sind also mit demselben Gas 50 gefüllt. Das Gas 50 ist somit zugleich das Kontaktgas zur Kühlung der Wicklung 25 und ein Schutzgas für die Magnetlager 2 und 3, erfüllt also mehrere Funktionen.

An der Wandung 61 des Gasraumes 60 sind der Kaltkopf 24 für die Wicklung 25 und die Kaltköpfe 22 und 23 für die Magnetlager 2 und 3 durchgeführt und zweckmäßigerweise auch gehalten oder befestigt. Ferner sind an der Wandung 61 die Lageraußenteile 11 der Magnetlager 2 und 3 befestigt über Halteelemente 52 bzw. 53. Die Wandung 61 und die daran befestigten Komponenten sind vorzugsweise ortsfest und drehen sich nicht mit dem Rotor 20 mit.

Die im Magnetlager 3 gelagerte Rotorwelle 4 ist an der vom Kaltkopf 24 entgegengesetzten Stirnseite der Wandung 61 des Gasraumes 60 durch eine Öffnung durchgeführt. Diese Durchführung für die Rotorwelle 4 durch die Wandung 61 des Gasraumes 60 ist mit einer außenliegenden Rotationsdichtung 40, insbesondere einer Gleitring- oder Simmerring-Dichtung, einer Radialwellendichtung, einer Stopfbuchsendichtung oder einer Ferrofluiddichtung gegen Lufteintritt von außen oder Entweichen des Kontaktgases 50 von innen abgedichtet.

Der Druck des Gases 50 im Gasraum 60 wird im allgemeinen auf wenigstens Atmosphärendruck (ca. 1 bar) und vorzugsweise auf einen darüber liegenden Überdruck eingestellt. Dadurch erhält man eine gegenüber Druckschwankungen unempfindliche und vor dem Eintritt von Luftfeuchtigkeit von außen auch bei einer Leckage besonders gut geschützte Einrichtung.

Das Gas 50 ist im außerhalb des Rotors 20 und der Magnetlager 2 und 3 liegenden Bereich des Gasraumes 60 (Außenraum) in der Regel zumindest annähernd auf Umgebungstemperatur. Der Temperaturgradient zwischen den kryotechnischen Temperaturen innerhalb des Rotors 20 und der Magnetlager 2 und 3 einerseits und der wesentlich höheren Temperatur im Außenraum des Gasraumes 60 andererseits wird in den relativ schmalen mit dem Gas 50 gefüllten Spalten aufrechterhalten, die durch die Zwischenräume 37 bis 39 und die Lagerspalte 10 gebildet werden. Um den Temperaturgradienten im aus dem Zwischenraum 37 zwischen Hohlwelle 34 und Kaltkopf 24 gebildeten Gasspalt zu erhalten, können zusätzlich nicht gezeigte ringförmige Bürsten, beispielsweise drei bis fünf Bürsten, in axialer Richtung gestaffelt im Gasspalt angeordnet werden, um Wärmeeintrag durch Konvektion zu vermeiden oder zu reduzieren.

Außerhalb des Behältnisses 21 umgibt die Wicklung 26 eine Ständerwicklung 45 auf einem Ständerträger 46. Ständerwicklung 45 und Ständerträger 46 bilden zusammen mit einem beide einschließenden Außengehäuse den Stator eines Elektromotors, insbesondere Synchronmotors, oder Generators. Dies sind die bevorzugten, aber nicht die einzige Anwendungen der Einrichtung gemäß der Erfindung.

FIG 2 zeigt ein Magnetlager, das insbesondere als Magnetlager 3 gemäß FIG 1 verwendet werden kann, in einer vergrößerten perspektivischen Darstellung. Das Lagerinnenteil 5 ist mit mehreren, beispielsweise sechs, ringscheibenförmigen permanentmagnetischen Elementen (Permanentmagnete) 6a bis 6f versehen. Diese permanentmagnetischen Elemente 6a bis 6f sind jeweils so polarisiert, daß axial, also in Richtung der Rotationsachse A gesehen, die Polarisation von Element zu Element entgegengesetzt ist. Die einzelnen Polarisationsrichtungen sind in der Figur durch gepfeilte Linien 7 angedeutet. Zwischen den permanentmagnetischen Elementen 6a bis 6f sind ringscheibenförmige Elemente (Zwischenelemente) 8a bis 8e aus einem ferromagnetischen Material wie z. B. Eisen angeordnet. Außerdem sind an den stirnseitigen Außenflächen der äußeren permanentmagnetischen Elemente 6a bis 6f den Elementen 8a bis 8e entsprechende ferromagnetische Elemente 8f und 8g vorgesehen. Das ferromagnetische Material dieser ferromagnetischen Elemente 8a bis 8g dient zur Konzentration und Homogenisierung des Magnetflusses an der zylinderförmigen Außenfläche des Lagerinnenteils 5 und erhöht dadurch die Tragkraft des Lagers 2. Zugleich verstärken die ferromagnetischen Elemente 8a bis 8g auch mechanisch das Lagerinnenteil 5 mit den im allgemeinen aus sprödem Material bestehenden permanentmagnetischen Elementen 6a bis 6f. Alle Elemente 6a bis 6f und 8a bis 8g sind stapelförmig axial hintereinander an der Rotorwelle 4 befestigt. Die Rotorwelle 4 besteht vorteilhaft aus einem nicht-magnetischen oder nicht magnetisierbaren Material wie z. B. aus einem besonderen Stahl.

Das Lagerinnenteil 5 ist durch einen Lagerspalt 10 getrennt von einem hohlzylinderförmigen, ortsfesten Lageraußenteil 11 umgeben. Die Spaltweite (radiale Abmessung) w des Lagerspaltes 10 zwischen Lagerinnenteil 5 und Lageraußenteil 11 liegt vorzugsweise in der Größenordnung der axialen Dicke d2 der ferromagnetischen Zwischenelemente 8a bis 8g und typischerweise zwischen 0,1 mm und 5 mm, vorzugsweise zwischen 0,3 mm und 1,5 mm.

Das einen Stator bildende Lageraußenteil 11 weist auf seiner dem Lagerinnenteil 5 zugewandten Innenseite eine supraleitende Struktur 12 auf, die außen auf einem Trägerkörper 13 abgestützt ist, der beispielsweise aus Metall, insbesondere Kupfer (Cu) besteht. Als Supraleitermaterial für die supraleitende Struktur 12 kommt jedes bekante Supraleitermaterial, insbesondere texturiertes YBa₂Cu₃O₇₋ₓ in Frage. Vorteilhaft sind dabei die kristallinen a-b-Ebenen von mindestens einem großen Teil des Supraleitermaterials im wesentlichen parallel zur Außenfläche des Lagerinnenteils 5 ausgerichtet. Die mittlere Korngröße (Korndurchmesser) der Kristallite (Körner) des Supraleiters sollte dabei größer als die axiale Dicke d1 der permanentmagnetischen Elemente 6a bis 6f sein, wobei die Korngröße in den kristallinen a-b-Ebenen betrachtet wird.

Der von benachbarten permanentmagnetischen Elementen (z. B. 6d, 6e) am Lagerinnenteil 5 hervorgerufene Magnetfluß wird weitgehend in dem gemeinsamen ferromagnetischen Zwischenelement (8d) konzentriert und tritt so mit hoher Flussdichte über dieses Zwischenelement in den Lagerspalt 10 aus. In dem Lagerspalt 10 schließt sich der Fluss zu jeweils benachbarten Zwischenelementen (8c bzw. 8e) hin. In der das Lagerinnenteil 5 umschließenden, den Lagerspalt 10 begrenzenden und ortsfesten supraleitenden Struktur 12 induziert der von den einzelnen Magnetpolen erzeugte Magnetfluß entsprechende Ströme, die wiederum eine magnetische Kopplung oder Gegenkopplung bewirken. Auf der Seite der Rotorwelle 4 schließt sich der magnetische Fluss im Bereich des nicht-magnetischen Materials der Rotorwelle 4. Damit wird dort vorteilhaft ein magnetischer Kurzschluss vermieden, der zu einer Reduzierung des in den Lagerspalt 10 austretenden Magnetflusses führen würde.

Das permanentmagnetische Material der Elemente 6a bis 6f soll ein maximales Energieprodukt (B * H)ₘₐₓ von wenigstens 20 MGOe aufweisen, um die erforderlichen Lagerkräfte und Lagerstabilität aufzubringen. Geeignete Materialien mit einem solch hohen Energieprodukt sind insbesondere eine Neodym(Nd)-Eisen(Fe)-Bor(B)-Legierung oder eine Samarium(Sm)-Cobalt(Co)-Legierung. Das permanentmagnetische Material kann zur Erhöhung von dessen Koerzitivfeldstärke auch gegebenenfalls gekühlt werden.

Außerhalb des Bereichs des Lagerinnenteils 5 weist das Magnetlager 3 eine absenkbare Halte- und Zentriervorrichtung 15 auf, die die Lagerkraft bei Stillstand aufnimmt, solange das supraleitende Material über seiner Betriebstemperatur liegt.

Gleichzeitig wird die Lagerposition axial und lateral zentriert durch eine Nut 17 in der Rotorwelle 4 und eine schneidenförmige Auflage 18 an der Einrichtung 15. Durch elektromagnetische Induktion entstehen elektromagnetische Kräfte zwischen Lagerinnenteil 5 und dem es umgebenden Lageraußenteil 11 (Stator), die der Bewegungsrichtung entgegengesetzt wirken und dazu führen, daß das Lagerinnenteil 5 und die Rotorwelle 4 etwa in der Mitte des Lagerspalts 10 frei schweben. Mit dieser Lagerung sind Lagerdrücke von bis zu 10 bar und eine erhebliche Steifigkeit der Lagerung gegen Verschiebungen der Rotorwelle 4 und des Rotors 20 in radialer und axialer Richtung zu erreichen.

In FIG 3 ist eine weitere Ausführungsform eines Magnetlagers veranschaulicht, die zweckmäßigerweise als Magnetlager 3 (oder 2) gemäß FIG 1 verwendet wird. Es ist wieder am Lagerinnenteil 5 ein Stapel von permanentmagnetischen Elementen 6j im Wechsel mit ferromagnetischen Elementen 8i vorgesehen. Dieser Stapel der Elemente 6j und 8i ist gemäß FIG 3 auf einem Trägerkörper 54 befestigt, der durch Haltescheiben 57 aus wärmeisolierendem, mechanisch stabilem Material, beispielsweise einem faserverstärkten, insbesondere glasfaserverstärkten, Kunststoff, und dazwischen liegendes Wärmeisolationsmaterial 55 von der Rotorwelle 4 beabstandet ist. Das Lageraußenteil 11 weist ebenfalls wieder eine supraleitende Struktur 12 und einen Trägerkörper 13 für die supraleitende Struktur 12 auf.

An den Trägerkörper 13 ist wieder ein Kaltkopf 23 senkrecht von außen nach innen verlaufend angeschlossen und damit thermisch angekoppelt, der an einer Außenhülse 19 des Magnetlagers 3 anliegt oder befestigt ist. Der Trägerkörper 13 ist mit der Außenhülse 19 über Haltescheiben 57 und dazwischen angeordnetes Wärmeisolationsmaterial 56 verbunden.

In der besonderen Ausgestaltung gemäß FIG 3 ist nun den Stirnseiten von supraleitender Struktur 12 mit Trägerkörper 13 und dem inneren Lagerteil 5 mit dem Magnetstapel an beiden Seiten axial zur Rotationsachse jeweils ein von der Außenhülse 19 nach innen zur Rotationswelle 4 gerichteter Wärmeisolationskörper 14 bzw. 14' vorgelagert. Zwischen dem Wärmeisolationskörper 14 und der Rotationswelle 4 ist ein parallel zur Rotationsachse A verlaufender erster Lagerteilspalt 41 gebildet. Zwischen einer nach innen zum Lagerinnenteil 5 gewandten Seite des Wärmeisolationskörpers 14 und dem Lagerinnenteil 5 ist ein zweiter Lagerteilspalt 42 gebildet, der senkrecht zur Rotationsachse A verläuft. Analog ist zwischen einer nach innen zum Lagerinnenteil 5 gewandten Seite des weiteren Wärmeisolationskörpers 14' und dem Lagerinnenteil 5 ein dritter Lagerteilspalt 43 gebildet, der senkrecht zur Rotationsachse A verläuft, und zwischen dem Wärmeisolationskörper 14' und der Rotationswelle 4 ein wieder parallel zur Rotationsachse A verlaufender vierter Lagerteilspalt 44. Die Hintereinanderschaltung des ersten Lagerteilspaltes 41, des zweiten Lagerteilspaltes, des Lagerspaltes 10, der dritten Lagerteilspaltes 43 und des vierten Lagerteilspaltes 44 bildet eine Gas-passage durch das Magnetlager 3 für das Gas 50. Der Vorteil dieser speziellen Ausbildung der Lagerspalte besteht darin, daß der erste Lagerteilspalt 41 und der vierte Lagerteilspalt 44, die an den vergleichsweise warmen Endbereichen des Magnetlagers 3 liegen, gegenüber dem Lagerspalt 10 näher zur Rotationsachse A liegen und das Gas 50 in den beiden Lagerteilspalten 41 und 44 einer entsprechend geringeren Zentrifugalkraft bei Drehung der Rotorwelle 4 mit dem Lagerinnenteil 5 ausgesetzt ist. Dies hat wiederum zur Folge, daß bei Rotation des Lagerinnenteils 5 auf der Rotorwelle 4 die Dichte des mitrotierenden Gases 50 in den achsennäheren Lagerteilspalten 41 und 44 (sowie 42 und 43) kleiner und in dem achsenferneren Lagerspalt 10 größer wird. Da sich andererseits die Dichte des Gases 50 infolge der zum Lagerspalt 10 hin stark abnehmenden Temperatur wieder erhöht, gleichen sich diese beiden gegenläufigen Effekte bis zu einem gewissen Grad aus. Man erhält somit in dieser Ausbildung des Magnetlagers 3 eine homogenere Dichteverteilung und stabilere Schichtung des Gases 50 innerhalb des Magnetlagers 3.

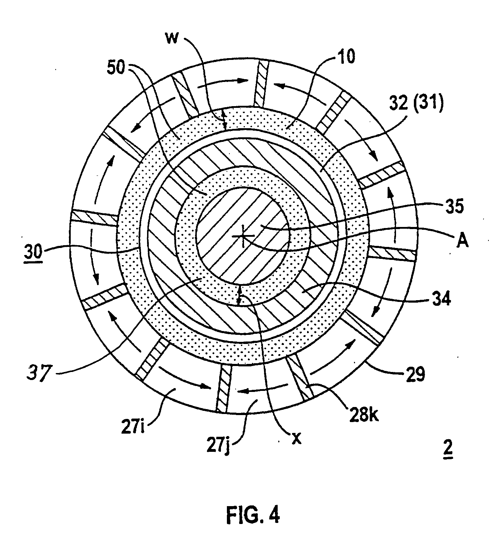

FIG 4 zeigt eine Abwandlung eines Magnetlagers 2 für die Einrichtung gemäß FIG 1 in einem Querschnitt. Es sind nun die permanentmagnetischen Elemente am mit 29 bezeichneten äußeren Lagerteil des Magnetlagers 2 und eine mit 32 bezeichnete, auf der Außenseite der Hohlwelle 34 aufgebrachte hohlzylindrische supraleitende Struktur als inneres Lagerteil 31 vorgesehen. Weiterhin sind die Permanentmagnete des Magnetlagers 2 nicht axial gestapelt, sondern es sind hohlzylindersegmentartige, axial ausgedehnte permanentmagnetische Elemente 27i, 27j (mit 1 ≤ i ≤ j; 1 ≤ j ≤ n) vorgesehen. Die permanentmagnetischen Elemente 27i, 27j sind jeweils über streifenartige, ebenfalls hohlzylindersegmentförmige ferromagnetische Elemente 28k (mit 1 ≤ k ≤ 2n) beabstandet und bilden zusammen mit diesen eine geschlossene hohlzylindrische Anordnung für das äußere Lagerteil 29. Das ortsfeste äußere Lagerteil 29 umschließt das rotierbare innere Lagerteil 31 im durch die Spaltweite w des Lagerspaltes 10 definierten Abstand w . Die Hohlwelle 34 wiederum umschließt unter Bildung des Zwischenraumes 37 der Spaltweite x den Wärmeübertragungskörper 35. In dem dargestellten Querschnitt ist gut zu erkennen, daß beide konzentrisch zueinander angeordnete Spalte, der Lagerspalt 10 und der Zwischenraum 37 jeweils mit demselben Gas 50 gefüllt sind.

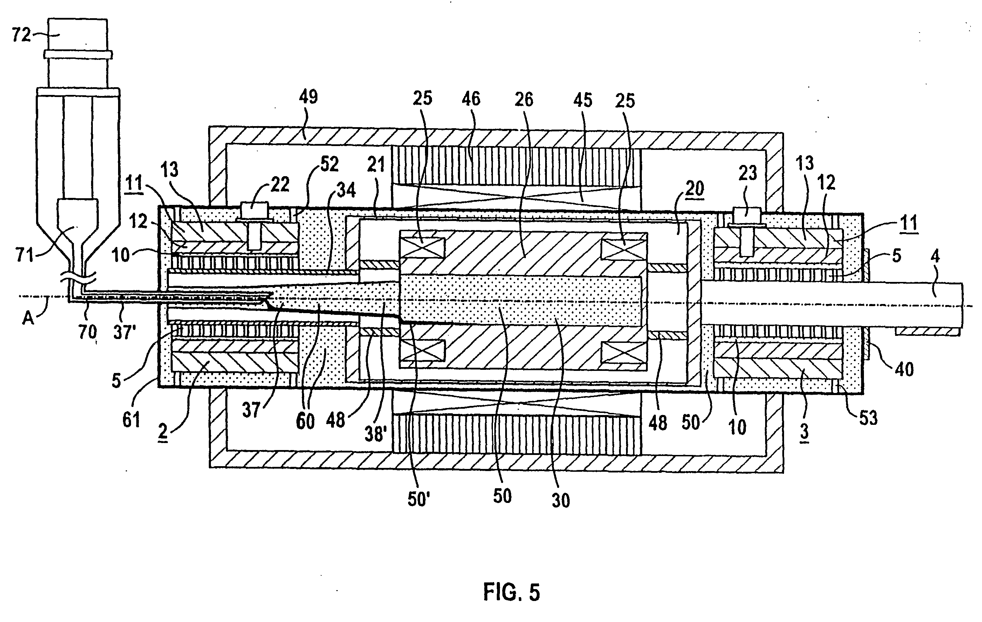

FIG 5 zeigt eine gegenüber FIG 1 abgewandelte Ausführungsform einer Einrichtung gemäß der Erfindung, bei der die aus Wärmeübertragungskörper 35 und Kaltkopf 24 gebildete Wärmeübertragungseinheit gemäß FIG 1 durch eine nach dem Wärmerohr(heat pipe)-Prinzip arbeitende Wärmeübertragungseinheit in FIG 5 ersetzt ist. Über ein, vorzugsweise vakuumisoliertes, Wärmerohr 70 wird Arbeitsflüssigkeit 50', die vorzugsweise dem verflüssigten Kontaktgas 50 entspricht, über einen konisch vom hinteren Teil der Hohlwelle 34 durch das Aufhängeelement 48 zum Hohlraum 30 des Wicklungsträgers 26 sich aufweitenden Innenraum 38' in den Hohlraum 30 eingebracht. Durch die Erwärmung verdampft die Arbeitsflüssigkeit und führt in Form der Verdampfungswärme Wärme vom Wicklungsträger 26 ab. Das verdampfte, als Arbeitsgas des Wärmerohrs 70 dienende Gas 50 wird auf umgekehrtem Weg durch den Innenraum 38' und das Wärmerohr 70 zu einem außerhalb der gasdichten Wandung 61 befindlichen Kondenser 71 transportiert und dort über den Kaltkopf 72 so weit heruntergekühlt, bis es sich wieder zur Arbeitsflüssigkeit 50' verflüssigt (kondensiert). Dann beginnt der Kreislauf (Arbeitszyklus) im Wärmerohr 70 von neuem. In dieser Ausführungsform dient das Gas 50 nicht nur als Kontaktgas, sondern zusätzlich auch als Arbeitsgas für die Kühlung mittels Wärmerohr. Es ist zwischen dem Wärmerohr 70 und der Hohlwelle 34 ein schmaler Zwischenspalt 37' gebildet, der mit dem übrigen Gasraum 60 in Verbindung steht und eine mechanische Entkopplung von Wärmerohr 70 und rotierenden Teilen wie der Hohlwelle 34 ermöglicht.

Bezüglich weiterer Einzelheiten der Materialien, Ausgestaltung, Bemessung und Funktion der Magnetlager, insbesondere gemäß den FIG 1 bis 5, wird auf die *DE 44 36 831 C2* verwiesen.

## Patentansprüche

1. Einrichtung mit
a) einem um eine Rotationsachse (A) rotierbaren oder rotierenden Rotor (20),
b) wenigstens einem Magnetlager (2,3), in dem der Rotor berührungslos lagerbar oder gelagert ist und das wenigstens eine supraleitende Struktur umfaßt,
c) einer Kühleinrichtung mit wenigstens einem Kaltkopf (22,23) zum Kühlen der wenigstens einen supraleitenden Struktur des oder jedes Magnetlagers,
wobei
d) der Rotor und das Magnetlager in einem gemeinsamen Gasraum (60) angeordnet sind, der von einer gasdichten Wandung (61) umschlossen ist.

2. Einrichtung nach Anspruch 1, bei der der Rotor in wenigstens zwei Magnetlagern gelagert ist, die an axial zur Rotationsachse entgegengesetzten Seiten des Rotors angeordnet sind.

3. Einrichtung nach Anspruch 1 oder Anspruch 2, bei der der Rotor über wenigstens eine mit dem Rotor verbundene oder verbindbare Rotorwelle (4,34) in dem Magnetlager oder den Magnetlagern gelagert ist.

4. Einrichtung nach Anspruch 3, bei der die Rotorwelle durch eine mit einer Rotationsdichtung (40) abgedichtete Öffnung in der Wandung des Gasraumes nach außen geführt ist.

5. Einrichtung nach einem der vorhergehenden Ansprüche, bei der der Rotor wenigstens eine supraleitend ausgebildete Wicklung (25) aufweist, die vorzugsweise um die Rotationsachse verläuft.

6. Einrichtung nach Anspruch 5, bei der die Wicklung auf oder in einem, vorzugsweise wärmeleitend ausgebildeten, Wicklungsträger (26) angeordnet ist, der einen axial zur Rotationsachse sich erstreckenden Hohlraum (30) aufweist.

7. Einrichtung nach Anspruch 6, bei der der Hohlraum des Wicklungsträgers mit dem Gasraum in einen Gasaustausch zulassender Verbindung steht.

8. Einrichtung nach Anspruch 6 oder Anspruch 7 mit einer mit dem Wicklungsträger, vorzugsweise über ein Kontaktgas (50), thermisch gekoppelten und mit einer Kühleinrichtung thermisch koppelbaren oder gekoppelten Wärmeübertragungseinheit (35,24) .

9. Einrichtung nach Anspruch 8, bei der die Wärmeübertragungseinheit vom Rotor mechanisch entkoppelt ist, insbesondere nicht mit dem Rotor mitrotiert, und/oder ortsfest mit der Wandung des Gasraumes verbunden ist.

10. Einrichtung nach Anspruch 8 oder Anspruch 9, bei der
a) die Wärmeübertragungseinheit einen in den Hohlraum des Wicklungsträgers ragenden, vorzugsweise zylindrisch ausgebildeten, Wärmeübertragungskörper umfaßt und
b) zwischen dem Wärmeübertragungskörper und dem Wicklungsträger ein um die Rotationsachse verlaufender, mit einem Kontaktgas gefüllter Zwischenraum gebildet ist, der vorzugsweise mit dem Gasraum in Verbindung steht.

11. Einrichtung nach einem der Ansprüche 8 bis 10, bei der die Wärmeübertragungseinheit (70) Wärme von dem Wicklungsträger durch zyklische Verdampfung und Kondensation eines Wärmetransportgases abführt.

12. Einrichtung nach Anspruch 11 in Rückbeziehung auf Anspruch 6 oder einen auf Anspruch 6 rückbezogenen Anspruch, bei der der Hohlraum des Wicklungsträgers wenigstens teilweise mit dem Wärmetransportgas gefüllt ist, so daß das Wärmetransportgas als Kontaktgas dient.

13. Einrichtung nach Anspruch 3 und Anspruch 8 oder einem der auf Anspruch 8 rückbezogenen Ansprüche, bei der eine in dem zugehörigen Magnetlager gelagerte Rotorwelle als Hohlwelle (34) ausgebildet ist und die Wärmeübertragungseinheit und/oder eine Gasverbindung zwischen Gasraum und einem Innenraum des Rotors, insbesondere dem Hohlraum im Wicklungsträger, wenigstens teilweise innerhalb der Hohlwelle angeordnet ist.

14. Einrichtung nach Anspruch 5 oder einem der auf Anspruch 5 rückbezogenen Ansprüche, bei der der Rotor ein gasdichtes Behältnis umfaßt und die Wicklung in einem, vorzugsweise evakuierten, Innenraum des Behältnisses angeordnet ist.

15. Einrichtung nach einem der vorhergehenden Ansprüche, bei der jedes Magnetlager
a) wenigstens ein inneres Lagerteil (5),
b) wenigstens ein äußeres Lagerteil (11),
c) wenigstens einen Permanentmagneten (6a bis 6f, 27i, 27j) an einem der beiden Lagerteile und
d) die wenigstens eine supraleitende Struktur an dem anderen der beiden Lagerteile umfaßt, wobei
e) Permanentmagnet und supraleitende Struktur derart elektromagnetisch miteinander wechselwirkend, daß zwischen dem inneren Lagerteil und dem äußeren Lagerteil ein um die Rotationsachse verlaufender Lagerspalt gebildet oder aufrechterhalten wird.

16. Einrichtung nach Anspruch 15, bei der
a) eines der beiden Lagerteile, insbesondere das innere Lagerteil, mit dem Rotor, insbesondere mit dessen Rotorwelle, verbindbar oder verbunden ist und
b) das andere Lagerteil, insbesondere das äußere Lagerteil, die wenigstens eine supraleitende Struktur aufweist und mit dem Kaltkopf verbunden ist.

17. Einrichtung nach Anspruch 15 oder Anspruch 16, bei der der Lagerspalt jedes Magnetlagers, vorzugsweise an seinen zur Rotationsachse axialen Enden, mit dem gemeinsamen Gasraum verbunden ist.

18. Einrichtung nach Anspruch 17, bei der der Lagerspalt mit dem Gasraum über Verbindungskanäle verbunden ist, die näher an der Rotationsachse liegen als der Lagerspalt.

19. Einrichtung nach einem der Ansprüche 15 bis 18, bei der wenigstens ein Magnetlager mehrere, vorzugsweise axial zur Rotationsachse oder in einer die Rotationsachse umlaufenden Anordnung, nebeneinander angeordnete Permanentmagnete (6a bis 6f, 27i, 27j) aufweist.

20. Einrichtung nach Anspruch 19, bei der zwischen wenigstens zwei der Permanentmagneten (6a bis 6f) jeweils ein zumindest teilweise aus einem magnetisch leitfähigen Material, insbesondere einem ferromagnetischen Material, beispielsweise Eisen (Fe), bestehendes Flussleitelement (8a bis 8e) zum Leiten des magnetischen Flusses der Permanentmagnete angeordnet ist.

21. Einrichtung nach einem der vorhergehenden Ansprüche, bei der der oder die Supraleiter eine Sprungtemperatur oberhalb 35 K, vorzugsweise oberhalb 77 K, aufweisen.

22. Einrichtung nach einem der vorhergehenden Ansprüche, bei der jede Kühleinrichtung zum Kühlen des oder der Magnetlager(s), insbesondere dessen oder deren supraleitender bzw. supraleitenden Struktur(en) wenigstens ein mit dem wenigstens einen Kaltkopf (22,23,24,72) thermisch gekoppeltes Kryokühler-System aufweist.

23. Einrichtung nach einem der vorhergehenden Ansprüche, bei der oder jeder Kaltkopf von außen in einer im wesentlichen senkrecht zur Rotationsachse verlaufenden Richtung zur supraleitenden Struktur des Magnetlagers geführt ist.

24. Einrichtung nach einem der vorhergehenden Ansprüche, bei der der Gasraum mit einem vorgegebenen Gas, insbesondere einem Inertgas, vorzugsweise Helium oder Neon oder Stickstoff, oder einer Mischung solcher Gase, gefüllt ist.

25. Einrichtung nach Anspruch 24, bei der das in den Gasraum eingefüllte Gas praktisch keinen Wasseranteil oder einen unterhalb eines kritischen Wertes liegenden Wasseranteil enthält.

26. Einrichtung nach einem der vorhergehenden Ansprüche, bei der der Gasdruck im Gasraum wenigstens so hoch wie der im die Wandung des Gasraumes umgebenden Außenraum herrschende Gasdruck, insbesondere Atmosphärendruck, oder höher ist.

27. Elektrische Maschine mit einer Einrichtung nach einem der vorhergehenden Ansprüche.

## Claims

1. Device having
a) a rotor (20) which rotates or can rotate about a rotation axis (A),
b) at least one magnetic bearing (2, 3), in which the rotor is borne or can be borne in a contactless manner, and which has at least one superconducting structure,
c) a cooling device having at least one cold head (22, 23) for cooling the at least one superconducting structure of the magnetic bearing or of each magnetic bearing,
with
d) the rotor and the magnetic bearing being arranged in a common gas area (60), which is surrounded by a gastight wall (61).

2. Device according to Claim 1, in which the rotor is borne in at least two magnetic bearings, which are arranged on axially opposite sides of the rotor with respect to the rotation axis.

3. Device according to Claim 1 or Claim 2, in which the rotor is borne in the magnetic bearing or the magnetic bearings via at least one rotor shaft (4, 34) which is connected or can be connected to the rotor.

4. Device according to Claim 3, in which the rotor shaft is passed to the outside through an opening, which is sealed by a rotation seal (40), in the wall of the gas area.

5. Device according to one of the preceding claims, in which the rotor has at least one superconducting winding (25), which preferably runs around the rotation axis.

6. Device according to Claim 5, in which the winding is arranged on or in a preferably thermally conductive winding support (26), which has a cavity (30) which extends axially with respect to the rotation axis.

7. Device according to Claim 6, in which the cavity in the winding support is connected to the gas area in a manner which allows gas to be exchanged.

8. Device according to Claim 6 or Claim 7 having a heat transmission unit (35, 24) which is thermally coupled to the winding support, preferably via a contact gas (50), and is thermally coupled or can be thermally coupled to a cooling device.

9. Device according to Claim 8, in which the heat transmission unit is mechanically decoupled from the rotor, in particular not rotating with the rotor, and/or is connected in a fixed position to the wall of the gas area.

10. Device according to Claim 8 or Claim 9, in which
a) the heat transmission unit has a heat transmission body which projects into the cavity in the winding support and is preferably cylindrical, and
b) an intermediate space, which runs around the rotation axis, is filled with a contact gas and is preferably connected to the gas area, is formed between the heat transmission body and the winding support.

11. Device according to one of Claims 8 to 10, in which the heat transmission unit (70) dissipates heat from the winding support by cyclic vaporization and condensation of a heat transport gas.

12. Device according to Claim 11 and referring back to Claim 6 or a claim which refers back to Claim 6, in which the cavity in the winding support is at least partially filled with the heat transport gas, so that the heat transport gas is used as the contact gas.

13. Device according to Claim 3 and Claim 8, or in one of the claims which refer back to Claim 8, in which a rotor shaft, which is borne in the associated magnetic bearing, is in the form of a hollow shaft (34), and the heat transmission unit and/or a gas connection between the gas area and an internal area of the rotor, in particular the cavity in the winding support, is arranged at least partially within the hollow shaft.

14. Device according to Claim 5 or one of the claims which refer back to Claim 5, in which the rotor has a gastight container, and the winding is arranged in a preferably evacuated internal area in the container.

15. Device according to one of the preceding claims, in which each magnetic bearing has
a) at least one inner bearing part (5),
b) at least one outer bearing part (11),
c) at least one permanent magnet (6a to 6f, 27i, 27j) on one of the two bearing parts, and
d) the at least one superconducting structure on the other of the two bearing parts,
with
e) the permanent magnet and the superconducting structure interacting with one another electromagnetically such that a bearing gap, which runs around the rotation axis, is formed or is maintained between the inner bearing part and the outer bearing part.

16. Device according to Claim 15, in which
a) one of the two bearing parts, in particular the inner bearing part, is connected or can be connected to the rotor, in particular to its rotor shaft, and
b) the other bearing part, in particular the outer bearing part, has the at least one superconducting structure and is connected to the cold head.

17. Device according to Claim 15 or Claim 16, in which the bearing gap of each magnetic bearing is connected to the common gas area, preferably at its axial ends with respect to the rotation axis.

18. Device according to Claim 17, in which the bearing gap is connected to the gas area via connecting channels which are located closer to the rotation axis than the bearing gap.

19. Device according to one of Claims 15 to 18, in which at least one magnetic bearing has two or more permanent magnets (6a to 6f, 27i, 27j), which are preferably arranged axially with respect to the rotation axis or are arranged alongside one another in an arrangement which surrounds the rotation axis.

20. Device according to Claim 19, in which a flux concentrating element (8a to 8e), which is at least partially composed of a magnetically permeable material, in particular of a ferromagnetic material, for example iron (Fe), is in each case arranged between at least two of the permanent magnets (6a to 6f) in order to guide the magnetic flux of the permanent magnets.

21. Device according to one of the preceding claims, in which the superconductor or superconductors has or have a critical temperature above 35 K, preferably above 77 K.

22. Device according to one of the preceding claims, in which each cooling device has at least one cryogenic cooler system, which is thermally coupled to the at least one cold head (22, 23, 24, 72), for cooling the magnetic bearing or bearings, in particular its or their superconducting structure or structures.

23. Device according to one of the preceding claims, in which the or each cold head is guided from the outside in a direction running essentially at right angles to the rotation axis to the superconducting structure of the magnetic bearing.

24. Device according to one of the preceding claims, in which the gas area is filled with a predetermined gas, in particular with an inert gas, preferably helium, neon or nitrogen, or with a mixture of such gases.

25. Device according to Claim 24, in which the gas with which the gas area is filled contains virtually no water, or contains less than a critical amount of water.

26. Device according to one of the preceding claims, in which the gas pressure in the gas area is at least as high as the gas pressure in the outer area surrounding the wall of the gas area, in particular atmospheric pressure, or is higher than it.

27. Electrical machine having a device according to one of the preceding claims.

## Revendications

1. Dispositif comprenant
a) un rotor (20) tournant ou pouvant tourner par rapport à un axe (A) de révolution,
b) au moins un palier (2, 3) magnétique dans lequel le rotor peut être monté ou est monté sans contact et qui comprend au moins une structure supraconductrice,
c) un dispositif de refroidissement ayant au moins une tête (22, 23) froide de refroidissement de la au moins une structure supraconductrice du ou de chaque aimant magnétique,
dans lequel
d) le rotor et le palier magnétique sont placés dans une chambre (60) commune pour du gaz qui est entourée d'une paroi (61) étanche au gaz.

2. Dispositif suivant la revendication 1, dans lequel le rotor est monté dans au moins deux paliers magnétiques qui sont disposés sur des côtés du rotor opposés axialement par rapport à l'axe de révolution.

3. Dispositif suivant la revendication 1 ou la revendication 2, dans lequel le rotor est monté dans le palier magnétique ou dans les paliers magnétiques par l'intermédiaire d'au moins un arbre (4, 34) de rotor relié au rotor ou pouvant être relié au rotor.

4. Dispositif suivant la revendication 3, dans lequel l'arbre du rotor est guidé vers l'extérieur en passant dans une ouverture rendue étanche par une garniture (40) d'étanchéité de révolution ménagée dans la paroi de l'espace pour du gaz.

5. Dispositif suivant l'une des revendications précédentes, dans lequel le rotor a au moins un enroulement (25) supraconducteur qui s'étend de préférence autour de l'axe de révolution.

6. Dispositif suivant la revendication 5, dans lequel l'enroulement est placé sur ou dans un support (26) d'enroulement qui, de préférence, est conducteur de la chaleur et qui a une cavité (30) s'étendant axialement par rapport à l'axe de révolution.

7. Dispositif suivant la revendication 6, dans lequel la cavité du support de l'enroulement communique avec l'espace pour du gaz d'une façon permettant un échange gazeux.

8. Dispositif suivant la revendication 6 ou la revendication 7, comprenant une unité (35, 24) de transfert de chaleur couplée thermiquement avec le support d'enroulement, de préférence par un gaz (50) de contact, et pouvant être couplée ou couplée thermiquement à un dispositif de refroidissement.

9. Dispositif suivant la revendication 8, dans lequel l'unité de transfert de chaleur est découplée mécaniquement du rotor, notamment ne tourne pas avec le rotor et/ou est reliée de manière fixe à la paroi de l'espace pour du gaz.

10. Dispositif suivant la revendication 8 ou la revendication 9, dans lequel
a) l'unité de transfert de chaleur comprend un corps de transfert de chaleur faisant saillie dans la cavité du support d'enroulement et constitué de préférence de façon cylindrique et
b) il est formé entre le corps de transfert de la chaleur et le support d'enroulement un espace intermédiaire s'étendant autour de l'axe de révolution empli d'un gaz de contact et communiquant de préférence avec l'espace pour du gaz.

11. Dispositif suivant l'une des revendications 8 à 10, dans lequel l'unité (70) de transfert de chaleur évacue de la chaleur du support d'enroulement par évaporation et condensation cycliques d'un gaz de transport de chaleur.

12. Dispositif suivant la revendication 11 rapportée à la revendication 6 ou à une revendication se rapportant à la revendication 6, dans lequel la cavité du support d'enroulement est emplie au moins en partie du gaz de transport de chaleur, de sorte que le gaz de transport de chaleur sert de gaz de contact.

13. Dispositif suivant la revendication 3 et la revendication 8 ou l'une des revendications qui est rapportée à la revendication 8, dans lequel un arbre de rotor monté dans le palier magnétique associé est constitué sous la forme d'un arbre (34) creux, et l'unité de transfert de la chaleur et/ou une communication pour du gaz entre l'espace pour du gaz et un espace intérieur du rotor, notamment la cavité du support d'enroulement, est placée au moins en partie à l'intérieur de l'arbre creux.

14. Dispositif suivant la revendication 5 ou l'une des revendications qui se rapporte à la revendication 5, dans lequel le rotor comprend un récipient étanche au gaz et l'enroulement est placé dans une chambre intérieure du récipient, de préférence mise sous vide.

15. Dispositif suivant l'une des revendications précédentes, dans lequel chaque palier magnétique a
a) au moins une partie (5) intérieure de palier,
b) au moins une partie (11) extérieure de palier,
c) au moins un aimant (6a à 6f, 27i, 27j) permanent sur l'une des deux parties de palier et
d) la au moins une structure supraconductrice sur l'autre des deux parties de palier
dans lequel
e) l'aimant permanent et la structure supraconductrice interagissent réciproquement du point de vue électromagnétique entre eux, de façon à former ou à maintenir entre la partie intérieure de palier et la partie extérieure de palier un intervalle de palier s'étendant autour de l'axe de révolution.

16. Dispositif suivant la revendication 15, dans lequel
a) l'une des deux parties de palier, notamment la partie intérieure de palier, peut être reliée au rotor, notamment à l'arbre du rotor, et
b) l'autre partie de palier, notamment la partie extérieure de palier, la au moins une structure supraconductrice et est reliée à la tête froide.

17. Dispositif suivant la revendication 15 ou la revendication 16, dans lequel l'intervalle de palier de chaque palier magnétique communique, de préférence à ses extrémités axiales par rapport à l'axe de révolution, avec la chambre commune pour du gaz.

18. Dispositif suivant la revendication 17, dans lequel l'intervalle de palier communique avec l'espace pour du gaz par des canaux de liaison qui sont plus proches de l'axe de révolution que de l'intervalle du palier.

19. Dispositif suivant l'une des revendications 15 à 18, dans lequel au moins un palier magnétique a plusieurs aimants (6a à 6f, 27i, 27j) permanents disposés côte à côte, de préférence axialement par rapport à l'axe de révolution ou suivant un agencement entourant l'axe de révolution.

20. Dispositif suivant la revendication 19, dans lequel il est disposé entre au moins deux des aimants (6a à 6f) permanents respectivement un élément (8a à 8e) de conduite du flux magnétique des aimants permanents qui est au moins en partie en un matériau magnétiquement conducteur, notamment en un matériau ferromagnétique, par exemple en fer (Fe).

21. Dispositif suivant l'une des revendications précédentes, dans lequel le ou les supraconducteurs a ou ont une température de changement brusque de la conductivité supérieure à 35 K et de préférence supérieure à 77 K.

22. Dispositif suivant l'une des revendications précédentes, dans lequel chaque dispositif de refroidissement du ou des aimant(s) magnétique(s), notamment de sa ou de ses structure(s) supraconductrice(s), a au moins un système de cryorefroidissement couplé thermiquement à la au moins une tête (22, 23, 24, 72) froide.

23. Dispositif suivant l'une des revendications précédentes, **caractérisé en ce que** la ou chaque tête froide est guidée de l'extérieur à la structure supraconductrice du palier magnétique dans une direction s'étendant sensiblement perpendiculairement à l'axe de révolution.

24. Dispositif suivant l'une des revendications précédentes, dans lequel l'espace pour du gaz est empli d'un gaz donné à l'avance, notamment d'un gaz inerte, de préférence d'hélium ou de néon ou d'azote ou d'un mélange de gaz de ce genre.

25. Dispositif suivant la revendication 24, dans lequel le gaz emplissant l'espace pour du gaz ne contient pratiquement pas de proportion d'eau ou contient une proportion d'eau inférieure à une valeur critique.

26. Dispositif suivant l'une des revendications précédentes, dans lequel la pression du gaz dans l'espace pour du gaz est au moins aussi haute que la pression du gaz régnant dans l'espace extérieur entourant la paroi de l'espace pour du gaz, notamment la pression atmosphérique, ou lui est supérieure.

27. Machine électrique ayant un dispositif suivant l'une des revendications précédentes.
